(19) Europäisches Patentamt
European Patent Office
Office européen des brevets

(11) **EP 2 234 807 B1**

(12) **EUROPEAN PATENT SPECIFICATION**

(45) Date of publication and mention of the grant of the patent:
**15.06.2011 Bulletin 2011/24**

(21) Application number: **08863126.2**

(22) Date of filing: **11.12.2008**

(51) Int Cl.:
***B32B 17/10*** *(2006.01)* ***C03C 27/12*** *(2006.01)*
***C08K 3/22*** *(2006.01)* ***C08L 29/14*** *(2006.01)*

(86) International application number:
**PCT/JP2008/073126**

(87) International publication number:
**WO 2009/078471 (25.06.2009 Gazette 2009/26)**

(54) **INTERLAYER FILM FOR LAMINATED GLASS, METHOD FOR MANUFACTURING THE SAME, AND LAMINATED GLASS CONTAINING THE SAME**

ZWISCHENSCHICHTFOLIE FÜR VERBUNDGLAS, HERSTELLUNGSVERFAHREN DAFÜR UND DIESE ENTHALTENDES VERBUNDGLAS

FILM D'INTERCOUCHE POUR UN VERRE FEUILLETÉ, PROCÉDÉ DE FABRICATION DE CELUI-CI, ET VERRE FEUILLETÉ CONTENANT CELUI-CI

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **18.12.2007 JP 2007326488**

(43) Date of publication of application:
**06.10.2010 Bulletin 2010/40**

(73) Proprietors:
- **Kuraray Co., Ltd.**
  **Okayama 710-0801 (JP)**
- **Kuraray Europe GmbH**
  **65926 Frankfurt am Main (DE)**

(72) Inventors:
- **MORIKAWA, Keisuke**
  **Kurashiki-shi**
  **Okayama 710-0801 (JP)**
- **KAWAKAMI, Tomohiro**
  **Kurashiki-shi**
  **Okayama 710-0801 (JP)**
- **MORIGUCHI, Nobuhiro**
  **Kamisu-shi**
  **Ibaraki 314-0197 (JP)**
- **STENZEL, Holger**
  **Hennef 53773 (DE)**

(74) Representative: **Kisters, Michael Marcus**
**Kuraray Europe GmbH**
**Patents and Trademarks, Geb.362**
**Mülheimer Straße 26**
**D-53840 Troisdorf (DE)**

(56) References cited:
**EP-A- 1 589 078**
**JP-A- 2001 261 383**
**US-A- 5 368 995**
**US-A1- 2005 079 363**
**US-B1- 6 180 224**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

## Description

### Technical Field

The present invention relates to an interlayer film for laminated glass which is excellent in transparency, heat-shielding property, durability and electromagnetic wave permeability, and which has good adhesiveness with glass. The invention also relates to a method for manufacturing the same and to a laminated glass containing the same.

### Background Art

A laminated glass is widely used for windowpanes of vehicles, e.g. automobiles, aircraft, buildings, and the like for improvement in safety, such as for preventing scattering of glass. Examples of such a laminated glass include one manufactured by laminating at least one pair of glass sheets while placing therebetween an interlayer film for laminated glass made of a plasticized polyvinyl butyral resin, or the like. However, use of a common interlayer film for laminated glass results in a problem that a near infrared ray (heat ray), which has a great thermal action, cannot be blocked. Therefore, a heat-shielding property is required to be imparted.

For imparting a heat ray-shielding property, resin compositions have been proposed which comprise an organic substance which can be easily combined with a plasticized polyvinyl butyral resin. For example, incorporation of a phthalocyanine compound as a near infrared absorbent has been proposed (see Patent Documents 1 to 3). However, there are basic problems on durability; organic substances are poor in weather resistance and the effect declines during long-term use.

On the other hand, heat-ray cut-off glass is marketed as glass having the heat-shielding property. Heat ray-cutting glass is a product obtained by applying a coating of a metal or a metal oxide to the surface of a glass sheet by metallization, sputtering, or the like. However, since thickening of a coating layer for improving the property of shielding the near infrared ray leads to decrease in visible light transmittance, some restrictions are imposed on practical use of such glass. In recent years, various kinds of communication facilities, for example, ham radio or emergency communication device, VICS (Vehicle Information and Communications System), ETC (Electronic Toll Collection system), satellite broadcasting, and the like have increasingly been carried on automobiles. However, there is a problem that the multllayer-coated glass inhibits transmission of electromagnetic waves, resulting in bad influences on communication systems such as cellular phones, car navigation systems, garage openers, and electronic toll collection systems. Furthermore, there was a problem that exfoliation, whitening, and the like occur because of the insufficient adhesion force between a coating layer and an interlayer film in the coating method.

On the other hand, there have been proposed interlayer films for laminated glass to which a heat-shielding function has been imparted by incorporating tin-doped indium oxide (ITO) fine particles or antimony-doped tin oxide (ATO) fine particles into a polymer (see Patent Documents 4 to 7). However, use of ITO has some problems, such as depletion of resources and price surge. Moreover, it is recently reported that ITO fine particles have a bad influence on the human body (see Non-Patent Document 1). On the other hand, use of ATO has problems such as unsatisfactory performance. Therefore, their substitutional materials are awaited.

In Interlayer films in which ITO or ATO is incorporated, surface treatment with a phosphate-based surface treating agent or a silane coupling agent has been applied in order to improve the dispersibility of ITO or AT0 (see Patent Documents 8 and 9). However, in the case of using phosphate-based surface treating agents, there is a problem in long-term stability of glass adhesion force because such a surface treating agent bleeds to the interface between a film and glass. Therefore, it is necessary to use a plurality of surface treating agents in combination, and more simple and convenient techniques have been awaited. On the other hand, surface treatment using a silane coupling agent needs a lot of time and heat energy, which leads to increase in cost. Therefore, more simple and convenient techniques have been awaited.

Patent Document 10 discloses an interlayer film for laminated glass having a heat ray-shielding effect which is formed of a resin composition obtained by mixing a polyvinyl acetal and a dispersion containing ITO particles, a plasticizer, an organic solvent and a dispersion stabilizer. Various types of substances are provided as examples of the dispersion stabilizer used here. It is also disclosed that use of a plurality of dispersion stabilizers in combination is preferred. However, low-molecular-weight dispersion stabilizers have risk of bleeding, whereas high-molecular-weight dispersion stabilizers are difficult to be mixed with a polyvinyl acetal uniformly. Therefore, it is not easy to improve dispersibility without impairing transparency or adhesiveness. Although polyvinyl butyral is contained in the many examples of the dispersion stabilizer, no working example using the same is disclosed and the document fails to teach what type of features polyvinyl butyral has in comparison to many other dispersion stabilizers. Moreover, since the dispersibility varies greatly depending upon the kind of fine particles, it is not clear whether a dispersion stabilizer capable of dispersing ITO particles can disperse other fine particles well or not.

Patent Document 11 discloses an interlayer film for laminated glass having been imparted with heat ray-shielding

performance by using a polyvinyl butyral as a dispersing agent and dispersing doped zinc oxide fine particles In the interlayer film. However, it is difficult to obtain performance equivalent to that of ITO by the technique disclosed in Patent Document 11 because of insufficient heat ray-shielding performance of doped zinc oxide fine particles. Moreover, in the technique disclosed in the working examples, doped zinc oxide fine particles are dispersed in a plasticizer in which polyvinyl butyral is insoluble. Therefore, polyvinyl butyral does not work as a dispersing agent effectively and a film finally obtained is high in haze, so that it is difficult to use the film as an interlayer film. Moreover, since the dispersibility varies greatly depending upon the kind of fine particles, it is not clear whether a dispersion stabilizer capable of dispersing doped zinc oxide fine particles can disperse other fine particles well or not.

Patent Document 12 discloses a resin composition which can absorb UV rays and infrared rays and contains anhydrous zinc antimonate. Patent Document 12 discloses dispersing a powder of anhydrous zinc antimonate in water or an organic solvent and then mixing it with various types of resins. However, when a resin composition is produced by such a method, anhydrous zinc antimonate flocculates in the resin composition, so that visible light scatters to result inevitably In deterioration of haze. Therefore, such a resin composition cannot be used in applications where a high level of transparency is required. The document also discloses treating anhydrous zinc antimonate with a silane coupling agent. However, since surface modification of anhydrous zinc antimonate fails to proceed well due to low reactivity of the surface thereof, flocculation occurs inevitably and the transparency was insufficient. Patent Document 12 discloses neither incorporation of anhydrous zinc antimonate into polyvinyl butyral nor use of the resin composition as an interlayer film for laminated glass.

Patent Document 13 discloses a method for recovering inorganic particles contained in an interlayer film for laminated glass. The document discloses examples of inorganic particles to be recovered, which include anhydrous zinc antimonate particles. In Example 2 of Patent Document 13, it is disclosed that an interlayer film is produced by mixing anhydrous zinc antimonate particles, a dispersing agent and a plasticizer, dispersing them in a bead mill, then adding polyvinyl butyral and performing melt-kneading. The document, however, discloses neither the type of the dispersing agent nor the dispersibility of the anhydrous zinc antimonate particles in the resulting interlayer film. Moreover, since anhydrous zinc antimonate particles are dispersed in a plasticizer containing no organic solvent, the dispersing agent can not work effectively, so that the haze of resulting interlayer films is high.

[Patent Document 1] JP 2003-265033 A
[Patent Document 2] JP 2003-265034 A
[Patent Document 3] JP 2005-157011 A
[Patent Document 4] JP 8-217500 A
[Patent Document 5] JP 8-259279 A
[Patent Document 6] JP 2001-302289 A
[Patent Document 7] JP 2005-343723 A
[Patent Document 8] JP 2003-261360 A
[Patent Document 9] JP 2006-27962 A
[Patent Document 10] JP 2005-187226 A
[Patent Document 11] JP 2001-261383 A
[Patent Document 12] JP 9-211221 A
[Patent Document 13] JP 2006-206654 A
[Non-Patent Document 1] J. Aerosol Res., 20 (3), 213-218 (2005)

## Disclosure of the Invention

### Problems to be Solved by the Invention

The present invention was made in order to solve the problems mentioned above. An object of the present invention is to provide an interlayer film for laminated glass which is excellent in transparency, heat-shielding property, durability and electromagnetic wave permeability, and which has good adhesiveness with glass. Another object of the invention is to provide a method for manufacturing such an interlayer film for glass and to provide a laminated glass produced using the film.

### Means for Solving the Problems

The problems are solved by providing an interlayer film for laminated glass made of a resin composition comprising polyvinyl acetal (A), anhydrous zinc antimonate (8) and a plasticizer (C), wherein the anhydrous zinc antimonate (B) having a $ZnO/Sb_2O_5$ molar ratio of from 0.8 to 1.2 is dispersed with an average particle diameter of 60 nm or less

in the resin composition. In this solution, it is preferable that the anhydrous zinc antimonate (B) is dispersed with an average particle diameter of 30 nm or less in the resin composition. It is preferable that the resin composition contain the anhydrous zinc antimonate (B) in an amount of from 0.1 to 3 parts by weight and the plasticizer (C) in an amount of from 20 to 100 parts by weight based on 100 parts by weight of the polyvinyl acetal (A).

In the interlayer film, it is preferable that the polyvinyl acetal (A) comprises a polyvinyl acetal (A1) and a polyvinyl acetal (A2), a viscosity average degree of polymerization of a starting polyvinyl alcohol of the polyvinyl acetal (A2) is higher than that of a starting polyvinyl alcohol of the polyvinyl acetal (A1), and a weight ratio (A1/A2) of the polyvinyl acetal (A1) to the polyvinyl acetal (A2) is from 0.2/100 to 10/100. In addition, it is more preferable that a difference in the degree of acetalization of the polyvinyl acetal (A1) and the polyvinyl acetal (A2) is 8 mol% or less and a viscosity average degree of polymerization of the starting polyvinyl alcohol of the polyvinyl acetal (A1) is from 600 to 1500.

The problems are solved also by providing a laminated glass obtained by adhering a plurality of glass sheets using the aforesaid interlayer film for laminated glass. In this solution, it is preferable that the visible light transmittance at a wavelength within a range of from 300 to 780 nm is 70% or more and the solar transmittance at a wavelength within a range of from 300 to 2500 nm is 70% or less. It is also preferable that the haze is 1.5% or less. Moreover, it is also preferable that the compression shear strength (s1) immediately after adhesion is 5 $N/mm^2$ or more and the ratio (s2/s1) of a compression shear strength (s2) after heat treatment at 100°C for 100 hours to the compression shear strength (s1) is from 0.8 to 1.2, and it is more preferable that the compression shear strength (s1) immediately after adhesion is 10 $N/mm^2$ or more.

The aforesaid problems are solved also by providing a method for manufacturing the aforementioned interlayer film for laminated glass, comprising: preparing a dispersion (d3) containing polyvinyl acetal (A1), the anhydrous zinc antimonate (B), the plasticizer (C) and an organic solvent (D), in which the polyvinyl acetal (A1) is dissolved, melt-mixing the dispersion (d3) and polyvinyl acetal (A2), and shaping it into a film-like form. In this solution, it is preferable that the preparing the dispersion (d3) comprises: preparing a dispersion (d2) containing the polyvinyl acetal (A1), the anhydrous zinc antimonate (B) and the organic solvent (D), in which the polyvinyl acetal (A1) is dissolved, and preparing the dispersion (d3) by mixing the dispersion (d2) and the plasticizer (C). Moreover, it is preferable that the dispersion (d2) is prepared by mixing the polyvinyl acetal (A1) with a dispersion (d1) containing the anhydrous zinc antimonate (B) and the organic solvent (D). It is also preferable that at least one of the dispersions (d1), (d2) and (d3) is subjected to pulverization. It is also preferable that the polyvinyl acetal (A1) is obtained by acetalizing a polyvinyl alcohol having a viscosity average degree of polymerization of from 600 to 2500. It is also preferable that a difference in the degree of acetalization of the polyvinyl acetal (A1) and polyvinyl acetal (A2) is 8 mol% or less. It is preferable that the weight ratio (A1/A2) of the polyvinyl acetal (A1) to the polyvinyl acetal (A2) is from 0.2/100 to 10/100.

## Effect of the Invention

The interlayer film for laminated glass of the present invention is excellent in transparency, heat-shielding property, durability, and electromagnetic wave permeability, and is good in adhesiveness with glass. Therefore, a laminated glass excellent in transparency, heat-shielding property, durability and electromagnetic wave permeability can be obtained by use of this interlayer film. According to the manufacturing method of the present invention, it is possible to manufacture such an interlayer film for laminated glass by a simple method.

## Best Modes for Carrying Out the Invention

The polyvinyl acetal (A) to be used in the present invention can be obtained by causing a polyvinyl alcohol to react with an aldehyde in water and/or an organic solvent in the presence of an acid catalyst, optionally neutralizing a resulting polyvinyl acetal (A), washing it and then drying it. The structure of the polyvinyl acetal (A) obtained is shown in the following formula (I).

**[Chem. 1]**

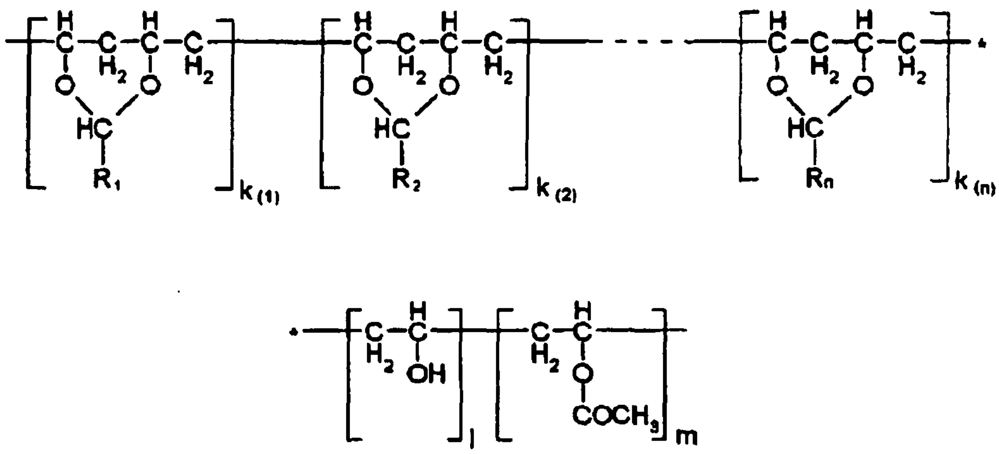

(I)

In the formula (I), the meanings of n, $k(_n)$, l, m, and $R_n$ are as follows:

n: the kind of the aldehyde used for acetalization (integer),
$k(_n)$: the ratio (molar ratio) of acetal units containing an aldehyde residue $R_n$,
l: the ratio (molar ratio) of polyvinyl alcohol units, and
m: the ratio (molar ratio) of polyvinyl acetate units.

It is noted that $k(_1) + k(_2) + ... + k(_n) + l + m = 1$, wherein $R_1$, $R_2$, ... $R_n$ indicate the residues of the aldehydes used for the acetalization reaction. In the structure of the formula (I), the mode of arrangement of the units is not particular restricted and it may be either block-like or random-like.

Each operation of the acetalization reaction, the neutralization, the washing and the dewatering in the production of the polyvinyl acetal (A) is not particularly restricted and may be performed by a conventional method. Examples of a method include: an aqueous solvent method in which an aqueous solution of polyvinyl alcohol and an aldehyde are subjected to acetalization in the presence of an acid catalyst to form resin particles; and an organic solvent method in which polyvinyl alcohol is dispersed in an organic solvent, followed by being subjected to acetalization with an aldehyde in the presence of an acid catalyst, and then the reaction solution is added to a poor solvent for the polyvinyl acetal (A) such as water to form resin particles. By any method, a slurry in which the polyvinyl acetal (A) is dispersed in a medium is obtained.

The slurry obtained by the aforesaid method is acidic due to the acid catalyst. Therefore, if necessary, its pH is adjusted to be from 5 to 9, preferably from 6 to 9, and more preferably from 6 to 8 by addition of an alkaline neutralizer such as sodium hydroxide or sodium carbonate.

As the polyvinyl alcohol for use in the production of the polyvinyl acetal (A), one having a viscosity average degree of polymerization of from 500 to 4000 is usually used and one having a viscosity average degree of polymerization of from 1000 to 2500 is preferably used. The viscosity average degree of polymerization of the polyvinyl acetal (A) is substantially the same as that of the starting polyvinyl alcohol. If the viscosity average degree of polymerization of the starting polyvinyl alcohol is less than 500, the mechanical properties will be deficient and the mechanical properties, especially toughness, of the interlayer film for laminated glass of the present invention will be deficient. On the other hand, if the starting polyvinyl alcohol has a viscosity average degree of polymerization of greater than 4000, the melt viscosity at the time of melt-shaping will be extremely high and problems will occur in a production process. In the event that two or more polyvinyl acetals are used as the polyvinyl acetal (A), it is only required that the average value taking account of their blending ratios satisfies the aforementioned range. The degree of polymerization of a polyvinyl alcohol can be measured in accordance with JIS K6726. Specifically, it can be determined from an intrinsic viscosity measured in water at 30°C after resaponification and subsequent purification of the polyvinyl alcohol. Particularly, it is preferable to use the polyvinyl acetal (A1) and the polyvinyl acetal (A2) described below in combination.

The polyvinyl alcohol is not particularly restricted and conventional polyvinyl alcohols such as those produced by saponification of polyvinyl acetate or the like with alkali, acid, ammonia water or the like may be used. A perfectly saponified polyvinyl alcohol may be used. Alternatively, a partly saponified polyvinyl alcohol may be used. The degree of saponification of a polyvinyl alcohol is preferably 80 mol% or more. The polyvinyl alcohol may be composed of either a single species or a mixture of two or more species. In the event that two or more polyvinyl alcohols are used, it is only

required that the average value taking account of their blending ratios satisfy the aforementioned range of the degree of saponification.

As the above-mentioned polyvinyl alcohol, copolymers of vinyl alcohol with a monomer copolymerizable therewith such as ethylene-vinyl alcohol copolymers and partially saponified ethylene-vinyl alcohol copolymers may also be used. Furthermore, modified polyvinyl alcohols modified with carboxylic acid or the like may also be used.

The aldehyde to be used for acetalizing a polyvinyl alcohol is not particularly restricted and examples thereof include formaldehyde (including paraformaldehyde), acetaldehyde (including paracetaldehyde), propionaldehyde, butyl aldehyde, amyl aldehyde, hexyl aldehyde, heptyl aldehyde, ethylhexyl aldehyde, cyclohexyl aldehyde, Furfural, glyoxal, glutaraldehyde, benzaldehyde, 2-methylbenzaldehyde, 3-methylbenzaldehyde, 4-methylbenzaldehyde, p-hydroxybenzaldehyde, m-hydroxybenzaldehyde, phenylacetaldehyde, and β-phenylproplonaldehyde. These aldehydes may be used singly or in combination. Among these aldehydes, butyl aldehyde is used preferably from a viewpoint of the ease in the production.

The polyvinyl acetal (A) obtained by performing acetalization of a polyvinyl alcohol using butyl aldehyde is called polyvinyl butyral. In the present invention, preferred is a polyvinyl butyral having butyral units wherein the proportion of the butyral units in the acetal units present in the polyvinyl acetal (A) (see the formula given below) is greater than 0.9. In other words, when $R_1 = C_3H_7$ (a residue of butyl aldehyde) in the structural formula of the polyvinyl acetal (A) shown by the formula (I) provided supra, the relationship expressed by $k_{(1)}/(k_{(1)} + k_{(2)} + ... + k_{(n)}) > 0.9$ is preferred.

The acid catalyst for the acetalization reaction is not particularly restricted and examples of the catalyst include organic acids such as acetic acid and p-toluenesulfonic acid, and inorganic acids such as nitric acid, sulfuric acid and hydrochloric acid. The neutralizer for the acetalization reaction is not particularly restricted and examples thereof include alkalis such as sodium hydroxide, potassium hydroxide, ammonia, sodium acetate, sodium carbonate, sodium hydrogencarbonate, and potassium carbonate; alkylene oxides such as ethyleneoxide; and glycidyl ethers such as ethylene glycol diglycidyl ether.

The degree of acetalization of the polyvinyl acetal (A) can be defined by the following formula.

$$\text{Degree of acetalization (mol\%)} = [(k_{(1)} + k_{(2)} + \cdots + k_{(n)}) \times 2]/[(k_{(1)} + k_{(2)} + \cdots k_{(n)}) \times 2 + l + m] \times 100$$

The degree of acetalization of the polyvinyl acetal (A) is preferably from 55 to 83 mol%. A polyvinyl acetal (A) having a degree of acetalization of less than 55 mol% is undesirable because of its high production cost, difficultly in obtaining it, and its poor melt-processability. A polyvinyl acetal (A) having a degree of acetalization of higher than 83 mol% is not economical because it requires a prolonged acetalization reaction time. As to the polyvinyl acetal (A), only one species may be used, or alternatively two or more species may be used in combination. In the event that two or more polyvinyl acetals are used, it is only required that the average value taking account of their blending ratios satisfy the aforementioned range of the degree of acetalization.

The interlayer film for laminated glass of the present invention is plasticized with a plasticizer (C). As the plasticizer (C), conventional plasticizers used for the polyvinyl acetal (A) can be used. Preferably, fatty acid esters of aliphatic polyols are used. In particular, fatty acid diesters of aliphatic dials are preferred. Moreover, fatty acid esters of polyalkylene glycols, especially polyethylene glycol, are preferred. In such embodiments, di-, tri- and tetraalkylene glycols are preferably used as polyalkylene glycol. Esters of fatty acids having 4 to 10 carbon atoms are preferably used. The molecular weight of the plasticizer (C) is preferably from 200 to 800, and more preferably from 300 to 500. Specific examples include triethylene glycol di-2-ethyl butyrate, triethylene glycol di-2-ethylhexanoate, triethylene glycol di-n-heptanoate, tetraethylene glycol di-2-ethythexanoate, tetraethylene glycol di-n-heptanoate, and oligoethylene glycol di-2-ethylhexanoate. As to the plasticizer (C), only one species may be used, or alternatively two or more species may be used in combination.

The added amount of the plasticizer (C) is preferably from 20 to 100 parts by weight based on 100 parts by weight of the polyvinyl acetal (A). If the amount is less than 20 parts by weight, the resulting interlayer film or laminated glass may have deficient impact resistance. If it exceeds 100 parts by weight, the plasticizer(C) will bleed out and, as a result, the resulting interlayer film or laminated glass may have decreased transparency or the adhesiveness between glass and the Interlayer film may be damaged.

In the interlayer film for laminated glass of the present invention, anhydrous zinc antimonate (B) is incorporated for the purpose of imparting a heat-shielding property. The anhydrous zinc antimonate (B) used in the present invention is a complex oxide containing a zinc oxide component and an antimony oxide component and the $ZnO/Sb_2O_5$ molar ratio thereof is from 0.8 to 1.2.

It is necessary that the anhydrous zinc antimonate (B) is dispersed minutely in the interlayer film for glass. If it

is not dispersed minutely, the visible light will scatter to lead increase in haze. Generally, it is known that at the same content of the anhydrous zinc antimonate (B), when the particle diameter decreases to 1/100, the interparticle distance also decreases to 1/100. On the other hand, when particles of the anhydrous zinc antimonate (B) flocculate in an interlayer film, it is believed that unevenness in particle distribution is formed in the interlayer film, resulting in formation of areas where heat rays are shielded and areas where heat rays are allowed to pass, and as a result, the shielding performance will deteriorate. Therefore, when the anhydrous zinc antimonate (B) is dispersed in the form of fine particles with an average particle diameter of 30 nm or less in the interlayer film for laminated glass, the anhydrous zinc antimonate (B) becomes crowded in the interlayer film, so that the heat-shielding performance increases. Because of this "nano size effect", the interlayer films for glass of the present invention can be imparted with the heat-shielding performance effectively by a small amount of fine particles of the anhydrous zinc antimonate (B).

The content of the anhydrous zinc antimonate (B) is preferably from 0.1 to 3 parts by weight based on 100 parts by weight of the polyvinyl acetal (A). The optimal content of the anhydrous zinc antimonate (B) varies depending upon the thickness of the interlayer film and may be adjusted appropriately. If the content of the anhydrous zinc antimonate (B) exceeds 3 parts by weight, the visible light transmittance may decrease and therefore it is preferably 2.5 parts by weight or less, and more preferably 2 parts by weight or less. On the other hand, if the content of the anhydrous zinc antimonate (B) is less than 0.1 parts by weight, the heat ray-shielding property may become deficient and therefore it preferably is 0.2 parts by weight or more, more preferably is 0.3 parts by weight or more, particularly preferably is 0.4 parts by weight or more, and most preferably is 0.5 parts by weight or more.

In the interlayer film for laminated glass of the present invention, it is preferable that the content of a phosphate-based surfactant is from 0 to 60 ppm in terms of phosphorus. This is because when a phosphate-based surface treating agent is used, a phosphate-based surfactant bleeds to the interface between a film and glass to result in a problem with stability of long-term adhesion force to the glass. It is more preferable that the content of the phosphate-based surfactant is 20 ppm or less, and it is even more preferable that no phosphate-based surfactant is contained.

In the interlayer film for laminated glass of the present invention, it is preferable that the content of an organosilicon compound represented by the following formula (II) is from 0 to 10 ppm in terms of silicon:

$$Si(OR^1)_aR^2_b \qquad (II)$$

in the formula (II), $R^1$ represents an alkyl group, $R^2$ represents an organic group containing an alkyl group, a polyoxyalkylene group, a phenyl group, a styryl group, a (meth)acryloxy group, an epoxy group, a vinyl group, an isocyanate group, a mercapto group or an ureido group, "a" represents an integer of 1 to 3, and "b" represents an integer of 1 to 3, where a + b is 4.

The organosilicon compound represented by the formula (II) is also called a silane coupling agent, and it is used for surface treatment of inorganic particles. Also in the interlayer film for laminated glass of the present invention, treating the surface of anhydrous zinc antimonate with a silane coupling agent is available. However, the surface treatment with a silane coupling agent needs a lot of time and a lot of thermal energy in an application step and a drying step, and therefore it will become a factor of cost increase. Considering such circumstances, the content of the organosilicon compound more preferably is 5 ppm or less, and it is even more preferable that no organosilicon compound is contained.

In the interlayer film for laminated glass of the present invention, various additives, such as antioxidants, stabilizers, UV absorbers, lubricants, flame retarders, processing aids, antistatic agents, colorants, heat ray reflecting agents, heat ray absorbents, impact-resistant aids, adhesion conditioners, fillers and moisture resisting agents may, as needed, be incorporated in addition to the polyvinyl acetal (A), the anhydrous zinc antimonate (B) and the plasticizer (C) unless the effect of the invention is damaged.

Among such additives, adhesion conditioners are preferably used depending on applications because they can lower the adhesive strength to the glass moderately. The adhesion conditioners are not particularly restricted, but magnesium salts or potassium salts are preferably used. Magnesium salts or potassium salts are preferably added in the form of organic acid salts. Specifically, the salts are added in the form of acetate, heptanoate, octanoate, nonanoate, decanoate or the like. Those salts are preferably added as an aqueous solution. The content of the adhesion conditioner is not particularly restricted, but preferably 0.0001 to 1.0 parts by weight based on 100 parts by weight of the polyvinyl acetal (A). If the content of the adhesion conditioner is less than 0.0001 parts by weight, the adhesive strength of the interlayer film for laminated glass of the present invention to the glass sheet may become too high, leading to deterioration of the penetration resistance of the laminated glass. Therefore, 0.01 parts by weight or more is more preferred. On the other hand, if the content of the adhesion conditioner exceeds 1.0 part by weight, the adhesive strength may lower excessively or the external appearance may deteriorate because the adhesion conditioner flocculates. Therefore, 0.7 parts by weight or less is more preferred.

The following is a description regarding a method for producing the interlayer film for laminated glass of the present invention. The interlayer film for laminated glass is made of a resin composition containing a polyvinyl acetal (A), an anhydrous zinc antimonate (B) and a plasticizer (C), where the anhydrous zinc antimonate (B) is dispersed with

an average particle diameter of 60 nm or less in the resin composition, preferably 35 nm or less, and more preferably 30 nm or less. Therefore, it is important to adopt a method by which an anhydrous zinc antimonate (B) can be dispersed in this manner.

In order to disperse the anhydrous zinc antimonate (B) with an average particle diameter of 60 nm or less, it is preferable to prepare a dispersion in which the anhydrous zinc antimonate (B) is minutely dispersed and then incorporate it to a polyvinyl acetal (A). In order to finally disperse the anhydrous zinc antimonate (B) with an average particle diameter of 60 nm or less in a resin composition, it is conceivable that the anhydrous zinc antimonate (B) must have been dispersed minutely also in such a dispersion. Such a dispersion can be obtained as a commercially available sol. In many of such sols as received, however, primary particles are flocculated, so that the average particle diameter is far larger than 60 nm and is about 100 nm or more. Therefore, it is preferable to apply an operation of mechanical pulverization to a dispersion.

As a dispersion medium in which the anhydrous zinc antimonate (B) is dispersed, an organic solvent (D) Is preferably used. In particular, an organic solvent (D) which can dissolve a polyvinyl acetal (A) is preferable used. It is because a polyvinyl acetal (A) and an anhydrous zinc antimonate (B) can be mixed therein uniformly and an addition effect can also be obtained in the case of adding a polyvinyl acetal (A) as a protective colloid. Examples of the organic solvent (D) in which the polyvinyl acetal (A) can be dissolved include methanol, ethanol, propanol, isopropanol, n-butanol, isobutanol, sec-butanol, tert-butanol, diacetone alcohol, benzyi alcohol, methylcellosolve, ethylcellosolve, butylcellosolve, acetone, methyl ethyl ketone, cyclohexanone, isophorone, N,N-dimethylacetamide, N,N-dimethylformamide, N-methyl-2-pyrrolidone, methyl acetate, ethyl acetate, isopropyl acetate, n-butyl acetate, dioxane, tetrahydrofuran, methylene chloride, propylene chloride, ethylene chloride, chloroform, toluene, xylene, pyridine, acetic acid, and dimethyl sulfoxide. Considering the affinity with an anhydrous zinc antimonate (B), an alcohol is used preferably and methanol, ethanol, propanol or isopropanol is used particularly preferably. In order not to allow an organic solvent (D) to remain in an interlayer film, it is preferable that the molecular weight of the organic solvent (D) is not excessively large. It preferably is less than 200, more preferably is 150 or less, and even more preferably is 100 or less. The molecular weight of the organic solvent (D) usually is 30 or more. As the organic solvent (D), either one species may be used or two or more species may be used in combination. Moreover, an organic solvent (D) and water may be used in combination as a dispersion medium.

Examples of an apparatus for pulverizing an anhydrous zinc antimonate (B) in a dispersion to disperse minutely include a sand mill, a ball mill, a jet mill, a homogenizer, an attritor, a paint shaker, a high-speed stirrer, an ultrasonic dispersion machine, and a bead mill. Flocculated particles of an anhydrous zinc antimonate (B) can be pulverized to disperse by use of such an apparatus. In order to efficiently achieve a small average particle diameter, a bead mill is preferred.

One preferable concrete method for manufacturing an interlayer film for laminated glass is a method comprising: preparing a dispersion (d3) containing a polyvinyl acetal (A1), an anhydrous zinc antimonate (B), a plasticizer (C) and an organic solvent (D), in which the polyvinyl acetal (A1) is dissolved, melt-mixing the dispersion (d3) and a polyvinyl acetal (A2), and shaping it into a film-like form. This is a method in which part of the polyvinyl acetal (A1) is dissolved into the dispersion (d3) which contains the anhydrous zinc antimonate (B), the plasticizer (C) and the organic solvent (D) beforehand, and then it is melt-mixed with the rest of the polyvinyl acetal (A2). It is conceivable that this method makes the polyvinyl acetal (A1) possible to work as a protective colloid (dispersing agent) to the particles of the anhydrous zinc antimonate (B). When a dispersion in which the polyvinyl acetal (A1) is not dissolved is melt-mixed with the polyvinyl acetal (A2), there is a risk that particles of the anhydrous zinc antimonate (B) flocculate during melt-kneading to increase the haze of a film, so that desired transparency or heat ray-shielding performance fails to be obtained.

The weight of the organic solvent (D) contained in the dispersion (d3) preferably is from 1 to 100 times the weight of the polyvinyl acetal (A1). By causing the dispersion (d3) to contain not less than a certain amount of the organic solvent (D), it becomes easy to dissolve the polyvinyl acetal (A1) and the plasticizer (C), and also it becomes easy to disperse the particles of the anhydrous zinc antimonate (B) minutely and stably. The content of the organic solvent (D) more preferably is twice or more the weight of the polyvinyl acetal (A1). On the other hand, if the content of the organic solvent (D) is excessively large, the solvent must be removed by the time of forming an interlayer film, resuming in disadvantage in energy aspect, and in addition the melt-shapability will deteriorate. The content of the organic solvent (D) preferably is 50 times or less, more preferably is 30 times or less the weight of the polyvinyl acetal (A1).

At this time, it is preferable that the polyvinyl acetal (A1) is obtained by acetalizing a polyvinyl alcohol having a viscosity average degree of polymerization of from 600 to 2500. If the viscosity average degree of polymerization of a starting polyvinyl alcohol exceeds 2500, the viscosity of a solution of polyvinyl acetal (A1) may become so high that it will be difficult to pulverize the anhydrous zinc antimonite (B) when pulverizing is performed to disperse it. The viscosity average degree of polymerization more preferably is 2000 or less, and even more preferably is 1500 or less. If the viscosity average degree of polymerization of a starting polyvinyl alcohol is less than 600, the protective colloid effect of a resulting polyvinyl acetal deteriorates, so that the anhydrous zinc antimonate (B) becomes easy to flocculate. The flocculation may result in increase in haze of a resulting film and in failure to obtain desired transparency or heat ray-shielding performance. The viscosity average degree of polymerization more preferably is 800 or more. The viscosity average degree of polymerization of the polyvinyl alcohol to be used as a raw material of the polyvinyl acetal (A2) is equal to or almost equal to the viscosity average degree of polymerization of the polyvinyl alcohol as a raw material of the polyvinyl acetal (A). In order to enhance the mechanical strength of an interlayer film while achieving satisfactory dispersibility of the particles of the anhydrous zinc antimonate (B) by keeping the viscosity of the dispersion (d3) low, it is preferable to adjust the viscosity average degree of polymerization of the polyvinyl alcohol as a raw material of the polyvinyl acetal (A2) be higher than the viscosity average degree of polymerization of the polyvinyl alcohol of a raw material of the polyvinyl acetal (A1).

Moreover, a difference in the degree of acetalization of the polyvinyl acetal (A1) and the polyvinyl acetal (A2) is preferably 8 mol% or less, and more preferably 5 mol% or less. The degree of acetalization of the polyvinyl acetal (A1) and that of the polyvinyl acetal (A2) may be same. If the difference in the degree of acetalization of the polyvinyl acetal (A1) and the polyvinyl acetal (A2) exceeds 8 mol%, the polyvinyl acetal (A1) and the polyvinyl acetal (A2) may become incompatible with each other, leading to uneven distribution of the particles of the polyvinyl acetal (A1) and anhydrous zinc antimonite (B) in a matrix of the polyvinyl acetal (A2) in the resulting interlayer film. Therefore, a haze of the resulting interlayer film may increase to deteriorate heat ray-shielding performance as well as transparency.

The weight ratio (A1/A2) of the polyvinyl acetal (A1) to the polyvinyl acetal (A2) preferably is from 0.2/100 to 10/100. A small amount of the polyvinyl acetal (A1) is used as a protective colloid for improving the dispersibility, and thereby the anhydrous zinc antimonate (B) is inhibited from flocculating when mixing with a large amount of the polyvinyl acetal (A2). If the weight ratio (A1/A2) is less than 0.2/100, the protective colloid effect deteriorates, so that the anhydrous zinc antimonate (B) becomes easy to flocculate. The flocculation may result in increase in haze of a resulting film and in failure to obtain desired transparency or heat ray-shielding performance. The weight ratio (A1/A2) more preferably is 0.5/100 or more, and even more preferably is 1/100 or more. When the weight ratio (A1/A2) exceeds 10/100, the dispersion has a high viscosity, so that it may become difficult to be pulverized. The weight ratio (A1/A2) more preferably is 5/100 or less.

In the preparation of the dispersion (d3), preferred is a method which comprises preparing a dispersion (d2) containing the polyvinyl acetal (A1), the anhydrous zinc antimonate (B) and the organic solvent (D), in which the polyvinyl acetal (A1) is dissolved, and mixing the dispersion (d2) and the plasticizer (C). It is because when preparing the dispersion (d2) containing the polyvinyl acetal (A1), the anhydrous zinc antimonate (B) and the organic solvent (D) before incorporating the plasticizer (C), it is easier to develop the protective colloid effect of the polyvinyl acetal (A1).

In the preparation of the dispersion (d2), preferred is a method which comprises mixing the polyvinyl acetal (A1) with a dispersion (d1) containing the anhydrous zinc antimonate (B) and the organic solvent (D). It is because particles of the anhydrous zinc antimonate (B) with a small particle diameter can be obtained more easily from the dispersion (d1) than from a powder. At this time, to mix the polyvinyl acetal (A1) dissolved in the organic solvent (D) is preferable because a uniform dispersion (d2) is easy to be obtained.

It is preferable that at least one of the dispersions (d1), (d2) and (d3) are subjected to pulverization. The method of pulverization is the same as that previously described. In particular, from the viewpoint of the ease of handling of a solution during the pulverization treatment or of the production cost, it is preferable to apply the pulverization treatment to the dispersion (d1) or the dispersion (d2). It is more preferable to apply the pulverization treatment to the dispersion (d1). Application of the pulverization treatment to the dispersion (d1), the viscosity of which is not so high and the amount of which is small, improves the efficiency of pulverization.

As a method of mixing the dispersion (d3) and the polyvinyl acetal (A2), it is preferable, from the viewpoint of productivity or the like, to mix them by melt-kneading. The kneading method is not particularly restricted and conventional kneading machines, such as single screw extruders, twin screw extruders, Brabenders, open rolls and kneaders, may be used. At this time, it is preferable to remove the organic solvent (D) during the kneading operation. When using an extruder, it is possible to remove the organic solvent (D) by evaporating it through a vent

As a method of shaping the resin composition into a film-like shape, a conventional method may be used. For example, a film may be produced by attaching a T-die directly to the melt-kneading machine, or alternatively, a film may be produced after once producing resin composition pellets. The thickness of a film is not particularly limited. Considering the penetration resistance and the weather resistance which a laminated glass is required to have at least, it is from 0.2 to 1.2 mm, and preferably is from 0.3 to 1.0 mm.

Using the thus-obtained interlayer film for laminated glass of the present invention, a laminated glass is produced. Glass to be used is not particularly restricted and transparent sheet glass which is commonly used may be used. Examples thereof include float sheet glass, polished sheet glass, figured sheet glass, wire-meshed glass, wire-lined glass, colored glass and heat ray-absorbing glass. Besides inorganic glass, polycarbonate, polymethyl methacrylate and the like, which are excellent in transparency, may also be used. A method for manufacturing the laminated glass of the present invention is not particularly restricted and conventional methods may be used. Specifically, a laminated glass is manufactured by sandwiching an interlayer film between at least two glass sheets, heating them to melt the film, and then cooling them to solidify the melt.

The laminated glass of the present invention preferably exhibits a visible light transmittance at a wavelength within a range of from 380 to 780 nm of 70% or more, and more preferably of 75% or more. Moreover, the laminated glass of the present invention preferably exhibits a solar transmittance at a wavelength within a range of from 300 to 2500 nm of 70% or less, and more preferably of 65% or less. When the visible light transmittance at a wavelength within a range of from 380 to 780 nm is 70% or more and the solar transmittance at a wavelength within a range of from 300 to 2500 nm is 70% or less, it is possible to obtain a heat-shielding effect while allowing visible light to pass. It is preferable that the visible light transmittance is higher than the solar transmittance by 12% or more, and more preferably by 15% or more. The laminated glass of the present invention preferably has a haze of 1.5% or less. Achievement of this condition makes the laminated glass excellent in transparency.

In a laminated glass, the adhesiveness between an interlayer film and glass is very important from the viewpoint of preventing glass from scattering on breakage. The adhesiveness between an interlayer film and glass is closely related with the performance to prevent glass scattering. The performance to prevent glass scattering can be controlled through control of adhesion force. From such a point of view, the compression shear strength of the laminated glass of the present invention preferably is 5 $N/mm^2$ or more, more preferably is 10 $N/mm^2$ or more, and even more preferably is 15 $N/mm^2$ or more. When the compression shear strength is less than 5 $N/mM^2$, the adhesiveness between the interlayer film and the glass is insufficient, so that safety problems such as scattering of glass on application of an impact to a laminated glass may occur. The compression shear strength of a laminated glass is measured by the method described in JP 2001-526165 T. Moreover, it is preferable that the laminated glass exhibit a compression shear strength (s1) immediately after adhesion of 5 $Nlmm^2$ or more and preferably 10 $N/mm^2$ or more and have a ratio (s2/s1) of a compression shear strength (s2) after heat treatment at 100°C for 100 hours to the compression shear strength (s1) of from 0.8 to 1.2. In other words, it is preferable that the adhesion force does not change greatly with time after the manufacture of the laminated glass.

The interlayer film for laminated glass of the present invention is excellent in transparency, heat-shielding property, durability and electromagnetic wave permeability, and Is good In adhesiveness with glass. Therefore, a laminated glass obtained by laminating this with glass can be used widely, for example, as window materials of buildings, vehicles, airplanes and ships. Vehicles in which a laminated glass is used include automobiles and trains. In automobiles, the laminated glass of the present invention can be used as a windshield, a side glass, a rear glass, a roof glass, or the like.

## Examples

The present invention will be described in more detail below with reference to Examples, but the invention is not limited by the Examples. In the following Examples and Comparative Examples, the visible light transmittance, the solar transmittance, the haze and the compression shear strength of a laminated glass were measured in accordance with the methods described below. The average particle diameter of zinc antimonate (B) in an interlayer film for laminated glass was measured in accordance with the method described below.

[Visible light transmittance and solar transmittance]

For prepared laminated glass sheets, a transmittance within a wavelength range of from 280 to 2500 nm was measured by using a spectrophotometer "UV-4100" manufactured by Hitachi, Ltd. Then, a visible light transmittance (%) within a range of from 380 to 780 nm was determined according to JIS R3106. Moreover, a solar transmittance (%) within a range of from 300 to 2500 nm was determined using a weighting factor provided in JIS R3106.

[Haze]

The haze (%) of the prepared laminated glass sheets was measured in accordance with JIS K7105.

[Compression shear strength]

The glass adhesiveness of an interlayer film was evaluated by measuring the compression shear strength in accordance with the method described in JP 2001-526165 T. A compression shearing test of a laminated glass 2 was performed using a compression shearing test machine 1 shown in Fig. 1. The laminated glass 2 was cut into a size of 26 mm x 24 mm and the cut piece was mounted to a position between a top jig 3 and a bottom jig 4 at an angle of 45°. Then, an exactly vertically downward force was applied to the top jig 3. At this time, the bottom jig 4 was movable horizontally. A compression shear strength ($N/mm^2$) was measured by dividing the maximum force required for shearing an interlayer film 6 from glass 5, by the area of a sample and an average value was obtained from five measurements. A compression shear strength (s1) of a sample which had been stored for 4 hours in an atmosphere at 23°C, 50% RH immediately after the preparation of the laminated glass 2, and a compression shear strength (s2) of a sample which

had been stored for 4 hours in an atmosphere at 23°C, 50% RH after a heat treatment at 100°C for 100 hours were measured.

[Average particle diameter of anhydrous zinc antimonate (B) in interlayer film]

A cross section of an interlayer film for laminated glass was photographed by using a transmission electron microscope (TEM) "H-800NA" manufactured by Hitachi High-Technologies Corp. In the photograph, 50 fine particles of the anhydrous zinc antimonate (B) were selected randomly and their major axes were measured. The average of the measurements was used as an average particle diameter (nm). It is noted that particles smaller than 5 nm were excluded from the measurement because they were not distinguished from contrast irregularities of the photograph.

[Electromagnetic wave permeability]

According to electromagnetic wave shielding effectiveness measurement method (Kansai Electronic Industry Development Center method), a reflection loss value was measured within the frequency range of from 10 MHz to 1 GHz, followed by comparing it with the value obtained using 2 mm-thick single glass sheet. Electromagnetic wave permeability was evaluated by performing comparison within the whole frequency range to measure and determining the difference (ΔdB) according to the following criteria.

A: ΔdB is within 5 dB. (passed)
B: ΔdB exceeds 5 dB.

Example 1

[Preparation of dispersion]

A dispersion (d1) was obtained by subjecting a 60 wt% methanol dispersion of anhydrous zinc antimonate (B) having a $ZnO/Sb_2O_5$ molar ratio of from 0.8 to 1.2 ("CX-Z693M-F" produced by Nissan Chemical Industries, Ltd.) to pulverization treatment with a bead mill. A dispersion (d2) was obtained by adding 7.2 g of an ethanol solution containing 10% by weight of a polyvinyl butyral (A1) (viscosity average degree of polymerization of starting polyvinyl alcohol = 1000, degree of acetalization = 70 mol%) dissolved, to 0.6 g of the dispersion (d1) under stirring. Moreover, by adding 15.2 g of triethylene glycol-di-2-ethylhexanoate (in the following, abbreviated as 3G8) as a plasticizer (C) while stirring the dispersion (d2), a dispersion (d3) was obtained in which the anhydrous zinc antimonate (B) was dispersed and the polyvinyl butyral (A1) and the plasticizer (C) were dissolved.

[Manufacture of interlayer film for laminated glass]

The dispersion (d3) prepared as mentioned above was added to 40 g of a polyvinyl butyral (A2) (viscosity average degree of polymerization of starting polyvinyl alcohol = 1700, degree of acetalization = 72 mol%), and then was mixed. The resulting mixture was kneaded in a Labo Plastomill at 170°C and then was press-molded with a pressing machine at 140°C for 5 minutes, thereby manufacturing a 1 mm thick interlayer film for laminated glass. The sample manufacture conditions are shown in Table 1. In Table 1, PVB represents a polyvinyl butyral and Pn represents a viscosity average degree of polymerization.

[Manufacture of laminated glass]

A laminated glass was manufactured by sandwiching the obtained interlayer film for laminated glass between two 2 mm-thick glass sheets (Planilux Clear, produced by Saint Gobain K.K.) and then holding them under reduced pressure at 140°C for 90 minutes.

[Evaluation]

The obtained interlayer film for laminated glass and the obtained laminated glass were evaluated and the results are shown in Table 2.

Example 2

A sample was produced in the same manner as in Example 1, except for adding a polyvinyl butyral (A1)

(viscosity average degree of polymerization of starting polyvinyl alcohol = 1700, degree of acetalization = 72 mol%) instead of the polyvinyl butyral (A1) added in the preparation of the dispersion (d2). The sample manufacture conditions are shown in Table 1. The obtained interlayer film for laminated glass and the obtained laminated glass were evaluated for their performance and the results are shown in Table 2.

Example 3

A sample was produced in the same manner as in Example 1, except for changing the concentration of the polyvinyl butyral (A1) of the ethanol solution added in the preparation of the dispersion (d2) to 5% by weight, and adding 14.4 g of the ethanol solution. The sample manufacture conditions are shown in Table 1. The obtained interlayer film for laminated glass and the obtained laminated glass were evaluated for their performance and the results are shown in Table 2.

Example 4

A sample was produced in the same manner as in Example 1, except for changing the concentration of the polyvinyl butyral (A1) of the ethanol solution added in the preparation of the dispersion (d2) to 20% by weight, and adding 7.2 g of the ethanol solution. The sample manufacture conditions are shown in Table 1. The obtained interlayer film for laminated glass and the obtained laminated glass were evaluated for their performance and the results are shown in Table 2.

Example 5

A sample was produced in the same manner as in Example 1, except for changing the added amount of the ethanol solution containing 10% by weight of a polyvinyl butyral (A1) dissolved added in the preparation of the dispersion (d2) to 3.6 g. The sample manufacture conditions are shown in Table 1. The obtained interlayer film for laminated glass and the obtained laminated glass were evaluated for their performance and the results are shown in Table 2.

Example 6

By adding 5.2 g of 3G8 as a plasticizer (C) while stirring the dispersion (d2) produced in the same manner as in Example 1, a dispersion (d3) was obtained in which the anhydrous zinc antimonate (B) was dispersed and the polyvinyl butyral (A1) and the plasticizer (C) were dissolved. The dispersion (d3) was mixed with the mixture of 10 g of plasticizer (C), 0.18 g of 25 % by weight aqueous solution of magnesium acetate, 0.09 g of 25 % by weight aqueous solution of potassium acetate and 40 g of a polyvinyl butyral (A2) (viscosity average degree of polymerization of starting polyvinyl alcohol = 1700, degree of acetalization = 72 mol%). The resulting mixture was molded in the same manner as in Example 1 and a sample was produced. The sample manufacture conditions are shown in Table 1. The obtained interlayer film for laminated glass and the obtained laminated glass were evaluated for their performance and the results are shown in Table 2.

Example 7

A dispersion (d2) was obtained by adding 3.2 g of an ethanol solution containing 10% by weight of a polyvinyl butyral (A1) (viscosity average degree of polymerization of starting polyvinyl alcohol = 1000, degree of acetalization = 70 mol%) dissolved, to 0.27 g of the dispersion (d1) produced in the same manner as in Example 1 under stirring. The dispersion (d2) was mixed with the mixture of 15.2 g of plasticizer (C) and 40 g of a polyvinyl butyral (A2) (viscosity average degree of polymerization of starting polyvinyl alcohol = 1700. degree of acetalization = 72 mol%). The resulting mixture was molded in the same manner as in Example 1 and a sample was produced. The sample manufacture conditions are shown in Table 1. The obtained interlayer film for laminated glass and the obtained laminated glass were evaluated for their performance and the results are shown in Table 2.

Example 8

A dispersion (d2) was obtained by adding 3.2 g of an ethanol solution containing 10% by weight of a polyvinyl butyral (A1) (viscosity average degree of polymerization of starting polyvinyl alcohol = 1000, degree of acetalization = 70 mol%) dissolved, to 0.27 g of the dispersion (d1) produced in the same manner as in Example 1 under stirring. Moreover, by adding 5.2 g of 3G8 as a plasticizer (C) while stirring the dispersion (d2), a dispersion (d3) was obtained in which the anhydrous zinc antimonate (B) was dispersed and the polyvinyl butyral (A1) and the plasticizer (C) were

dissolved. The dispersion (d3) was mixed with the mixture of 10 g of plasticizer (C), 0.54 g of 25 % by weight aqueous solution of magnesium acetate, 0.27 g of 25 % by weight aqueous solution of potassium acetate and 40 g of a polyvinyl butyral (A2) (viscosity average degree of polymerization of starting polyvinyl alcohol = 1700, degree of acetalizabon = 72 mol%). The resulting mixture was molded in the same manner as in Example 1 and a sample was produced. The sample manufacture conditions are shown in Table 1. The obtained interlayer film for laminated glass and the obtained laminated glass were evaluated for their performance and the results are shown in Table 2.

Comparative Example 1

A sample was produced in the same manner as in Example 1, except for failing to use the methanol dispersion of the anhydrous zinc antimonate (B). The sample manufacture conditions are shown in Table 1. The obtained interlayer film for laminated glass and the obtained laminated glass were evaluated for their performance and the results are shown in Table 2.

Comparative Example 2

A sample was produced in the same manner as in Example 1, except for failing to add the ethanol solution of the polyvinyl butyral (A1). The sample manufacture conditions are shown in Table 1. The obtained interlayer film for laminated glass and the obtained laminated glass were evaluated for their performance and the results are shown in Table 2.

Comparative Example 3

A sample was produced in the same manner as in Example 1, except for adding a polyvinyl butyral (A1) (viscosity average degree of polymerization of starting polyvinyl alcohol = 380, degree of acetalization = 72 mol%) instead of the polyvinyl butyral (A1) added in the preparation of the dispersion (d2). The sample manufacture conditions are shown in Table 1. The obtained interlayer film for laminated glass and the obtained laminated glass were evaluated for their performance and the results are shown in Table 2.

Comparative Example 4

A sample was produced in the same manner as in Example 1, except for adding a polyvinyl butyral (A1) (viscosity average degree of polymerization of starting polyvinyl alcohol = 1000, degree of acetalization = 62 mol%) instead of the polyvinyl butyral (A1) added in the preparation of the dispersion (d2). The sample manufacture conditions are shown in Table 1. The obtained interlayer film for laminated glass and the obtained laminated glass were evaluated for their performance and the results are shown in Table 2.

Comparative Example 5

A sample was produced in the same manner as in Example 1, except for failing to practice the pulverization treatment using the bead mill in the preparation of the dispersion (d1) of the anhydrous zinc antimonate (B). The sample manufacture conditions are shown in Table 1. The obtained interlayer film for laminated glass and the obtained laminated glass were evaluated for their performance and the results are shown in Table 2.

Comparative Example 6

A sample was produced in the same manner as in Example 1, except for, in the preparation of the dispersion (d2), failing to dissolve 0.72 g of a powder of the polyvinyl butyral (A1) in ethanol and directly adding to the dispersion (d1) of the anhydrous zinc antimonate (B). The sample manufacture conditions are shown in Table 1. The obtained interlayer film for laminated glass and the obtained laminated glass were evaluated for their performance and the results are shown in Table 2.

Comparative Example 7

A sample was produced in the same manner as in Example 1, except for, in the preparation of the dispersion (d2), adding 7.2 g of an ethanol solution in which 0.36 g of a phosphoric acid ester "A213B" produced by Dai-ichi Kogyo Seiyaku Co., Ltd. had been dissolved as a surfactant instead of adding the ethanol solution of the polyvinyl butyral (A1) in Example 1. The sample manufacture conditions are shown in Table 1. The content of phosphorus was measured by

an ICP emission spectrometer "IRIS-AP" manufactured by Thermo Fisher Scientific K.K. to be 2000 ppm. The obtained interlayer film for laminated glass and the obtained laminated glass were evaluated for their performance and the results are shown in Table 2.

Comparative Example 8

A dispersion (d1) was obtained by subjecting a 60 wt% methanol dispersion of anhydrous zinc antimonate (B) having a $ZnO/Sb_2O_5$ molar ratio of from 0.8 to 1.2 ("CX-Z693M-F" produced by Nissan Chemical Industries, Ltd.) to pulverization treatment with a bead mill. To 0.6 g of the obtained dispersion (d1), 3 g of ethanol was added and then 0.036 g of a silane coupling agent, phenyltriethoxysilane ("KBM903" produced by Shin-Etsu Silicones) was further added. The resulting solution was subjected to heat treatment at 80°C for one hour, followed by removal of the solvent by centrifugal separation. Additional heat treatment at 150°C provided particles of the anhydrous zinc antimonate (B) having a surface treated with a dehydration condensate of phenyltriethoxysilane were obtained. The particles were dispersed in a solvent in which 15.2 g of 3G8 and 0.2 g of xylene were mixed. The obtained dispersion was added to 40 g of a polyvinyl butyral (A2) (viscosity average degree of polymerization of starting polyvinyl alcohol = 1700, degree of acetalization = 72 mol%), and then was mixed. The resulting mixture was kneaded in a Labo Plastomill at 170°C and then was press-molded with a pressing machine at 140°C for 5 minutes, thereby manufacturing a 1 mm-thick interlayer film for laminated glass. The sample manufacture conditions are shown in Table 1. Furthermore, a laminated glass was produced in the same manner as in Example 1. The content of silicon was measured by an ICP emission spectrometer "IRIS-AP" manufactured by Thermo Fisher Scientific K.K. to be 650 ppm. The obtained interlayer film for laminated glass and the obtained laminated glass were evaluated for their performance and the results are shown in Table 2.

Table 1]

| | PVB (A2) | Plasticizer (C) | Anhydrous zinc antimonate (B) | PVB(A1) | | Other components | Organic solvent(D) | | | Pulverization treatment |
|---|---|---|---|---|---|---|---|---|---|---|
| | | | | Pn = 1000, degree of acetalization = 70 mol% | Other PVB | | Methanol | Ethanol | Xylene | |
| Example 1 | 100 | 38 | 0.9 | 1.8 | - | - | 0.6 | 16.2 | - | Yes |
| Example 2 | 100 | 38 | 0.9 | - | *1 | - | 0.6 | 16.2 | - | Yes |
| Example 3 | 100 | 38 | 0.9 | 1.8 | - | - | 0.6 | 34.2 | - | Yes |
| Example 4 | 100 | 38 | 0.9 | 3.6 | - | - | 0.6 | 14.4 | - | Yes |
| Example 5 | 100 | 38 | 0.9 | 0.9 | - | - | 0.6 | 8.1 | - | Yes |
| Example 8 | 100 | 38 | 0.9 | 1.8 | - | *A | 0.6 | 162 | - | Yes |
| Example 7 | 100 | 38 | 0.4 | 0.8 | - | - | 0.3 | 7.2 | - | Yes |
| Example 8 | 100 | 38 | 0.4 | 0.8 | - | *B | 0.3 | 7.2 | - | Yes |
| Comparative Example 1 | 100 | 38 | - | 1.8 | - | - | - | 16.2 | - | No |
| Comparative Example 2 | 100 | 38 | 0.9 | - | - | - | 0.6 | - | - | Yes |
| Comparative Example 3 | 100 | 38 | 0.9 | - | *2 | - | 0.8 | 16.2 | - | Yes |
| Comparative Example 4 | 100 | 38 | 0.9 | - | *3 | - | 0.6 | 16.2 | - | Yes |
| Comparative Example 5 | 100 | 38 | 0.9 | 1.8 | - | - | 0.6 | 16.2 | - | No |
| Comparative Example 6 | 100 | 38 | 0.9 | 1.8 | - | - | 0.6 | - | - | Yes |
| comparative Example 7 | 100 | 38 | 0.9 | - | - | *C | 0.6 | 17.1 | - | Yes |

(continued)

| | PVB (A2) | Plasticizer (C) | Anhydrous zinc antimonate (B) | PVB(A1) | | Other components | Organic solvent(D) | | | Pulverization treatment |
|---|---|---|---|---|---|---|---|---|---|---|
| | | | | Pn = 1000, degree of acetalization = 70 mol% | Other PVB | | Methanol | Ethanol | Xylene | |
| Comparative Example 8 | 100 | 38 | 0.9 | - | - | *D | - | - | 0.5 | Yes |

*Each number in the table is in part(s) by weight.
*1:Pn = 1700, degree of acetalization = 72 mol%, 1.8 parts *2:Pn= 380, degree of acetalization= 72 mol%, 1.8 parts *3:Pn= 1000. degree of acetalization= 62 mol%, 1.8 parts *A:0.45 parts of 25 wt% aqueous solution of magnesium acetate + 0.23 parts of 25 wt% aqueous solution of potassium acetate *B:1.35 parts of 25 wt% aqueous solution of magnesium acetate + 0.88 parts of 25 wt% aqueous solution of potassium acetate *C:Phosphoric acid ester 0.9 parts *D:Silane coupling agent 0.09 parts

[Table 2]

| | Visible light transmittance (%) | Solar transmittance (%) | Haze (%) | Compression shear strength immediately after adhesion (s1) ($N/mm^2$) | Compression shear strength after heat treatment (s2) ($N/mm^2$) | Average particle diameter of anhydrous zinc antimonate (B) (nm) | Electromagnetic wave permeability | Phosphorus content (ppm) | Silicon content (ppm) |
|---|---|---|---|---|---|---|---|---|---|
| Example 1 | 79 | 59 | 1.1 | 30 | 29 | 18 | A | <60 | <10 |
| Example 2 | 78 | 58 | 1.3 | 31 | 32 | 20 | A | <60 | <10 |
| Example 3 | 79 | 59 | 1.3 | 29 | 28 | 21 | A | <80 | <10 |
| Example 4 | 79 | 59 | 1.0 | 30 | 32 | 17 | A | <60 | <10 |
| Example 5 | 78 | 58 | 1.5 | 32 | 31 | 35 | A | <60 | <10 |
| Example 6 | 77 | 58 | 1.4 | 23 | 22 | 25 | A | <60 | <10 |
| Example 7 | 81 | 65 | 1.0 | 29 | 29 | 18 | A | <60 | <10 |
| Example 8 | 80 | 65 | 1.5 | 9 | 10 | 32 | A | <60 | <10 |
| Comparative Example1 | 88 | 80 | 1.0 | 29 | 32 | - | A | <60 | <10 |
| Comparative Example 2 | 72 | 65 | 32 | 27 | 28 | >200 | A | <60 | <10 |
| Comparative Example 3 | 76 | 56 | 4.5 | 32 | 34 | 110 | A | <60 | <10 |
| Comparative Example 4 | 74 | 66 | 53 | 31 | 32 | >200 | A | <60 | <10 |
| Comparative Example 5 | 78 | 58 | 2.9 | 30 | 29 | 80 | A | <60 | <10 |
| Comparative Example 6 | 74 | 65 | 76 | 29 | 29 | >200 | A | <60 | <10 |
| Comparative Example 7 | 75 | 64 | 26 | 11 | 17 | >200 | A | 2000 | <10 |

(continued)

| | Visible light transmittance (%) | Solar transmittance (%) | Haze (%) | Compression shear strength immediately after adhesion (s1) (N/mm$^2$) | Compression shear strength after heat treatment (s2) (N/mm$^2$) | Average particle diameter of anhydrous zinc antimonate (B) (nm) | Electromagnetic wave permeability | Phosphorus content (ppm) | Silicon content (ppm) |
|---|---|---|---|---|---|---|---|---|---|
| Comparative Example 8 | 70 | 61 | 86 | 28 | 27 | >200 | A | <60 | 650 |

The results shown in Tables 1 and 2 show that the interlayer films for laminated glass and the laminated glasses of the present invention (Examples 1 to 8) have high visible light transmittance, low solar transmittance and almost no haze, that they have both high transparency and high heat-shielding property, and that they are excellent in adhesiveness to glass.

On the other hand, when no anhydrous zinc antimonate (B) is contained like Comparative Example 1, an obtained laminated glass has a high solar transmittance and is defective in heat ray-shielding performance. When no polyvinyl acetal (A1) is added to a dispersion like Comparative Example 2, fine particles of the anhydrous zinc antimonate (B) flocculate and both the transparency and the visible light transmittance are insufficient. When the molecular weight of the polyvinyl acetal (A1) is low like Comparative Example 3, a sufficient protective colloid effect fails to develop, so that an anhydrous zinc antimonate (B) flocculates, resulting in insufficient transparency. When the degree of acetalization of the polyvinyl acetal (A1) and that of the polyvinyl acetal (A2) differ widely like Comparative Example 4, the polyvinyl acetal (A1) is incompatible with the polyvinyl acetal (A2), the particles of the polyvinyl acetal (A1) and the anhydrous zinc antimonite (B) are unevenly distributed in the resulting interlayer film, leading to insufficient transparency.

When a dispersion containing the anhydrous zinc antimonate (B) is not subjected to pulverization treatment like Comparative Example 5, the transparency is insufficient. When a polyvinyl acetal (A1) is mixed In the form of original powder without being dissolved in an organic solvent (D) like Comparative Example 6, a sufficient protective colloid effect fails to develop, so that an anhydrous zinc antimonate (B) flocculates, resulting in insufficient transparency. When a phosphoric acid ester, which has hitherto been known as a surface treating agent, is added instead of using a polyvinyl acetal (A1) like Comparative Example 7, fine particles of the anhydrous zinc antimonate (B) flocculate, so that no film sufficient in transparency is obtained and the adhesiveness to glass also deteriorates. Even though a silane coupling agent treatment, which is performed for ITO or the like, is performed like Comparative Example 8, the surface modification does not proceed sufficiently because of low reactivity of the surface of the anhydrous zinc antimonate (B), so that fine particles of the anhydrous zinc antimonate (B) flocculate, resulting in high haze.

## Brief Description of the Drawing

[Fig. 1] Fig. 1 is a schematic diagram of a machine for a compression shearing test of a laminated glass.

## Description of the Reference Numerals

1 Compression Shearing Test Machine
2 Laminated Glass
3 Top Jig
4 Bottom Jig
5 Glass
6 Interlayer Film

## Claims

1. An interlayer film for laminated glass made of a resin composition comprising polyvinyl acetal (A), anhydrous zinc antimonate (B) and a plasticizer (C), wherein the anhydrous zinc antimonate (B) having a $ZnO/Sb_2O_5$ molar ratio of from 0.8 to 1.2 is dispersed with an average particle diameter of 60 nm or less in the resin composition.

2. The interlayer film for laminated glass according to claim 1, wherein the anhydrous zinc antimonate (B) is dispersed with an average particle diameter of 30 nm or less in the resin composition.

3. The interlayer film for laminated glass according to claim 1 or 2, wherein the resin composition contains the anhydrous zinc antimonate (B) in an amount of from 0.1 to 3 parts by weight and the plasticizer (C) in an amount of from 20 to 100 parts by weight based on 100 parts by weight of the polyvinyl acetal (A).

4. The interlayer film for laminated glass according to any one of claims 1 to 3, wherein the polyvinyl acetal (A) comprises a polyvinyl acetal (A1) and a polyvinyl acetal (A2), a viscosity average degree of polymerization of a starting polyvinyl alcohol of the polyvinyl acetal (A2) is higher than that of a starting polyvinyl alcohol of the polyvinyl acetal (A1), and

a weight ratio (A1/A2) of the polyvinyl acetal (A1) to the polyvinyl acetal (A2) is from 0.2/100 to 10/100.

**5.** The interlayer film for laminated glass according to claim 4, wherein a difference in the degree of acetalization of the polyvinyl acetal (A1) and the polyvinyl acetal (A2) is 8 mol% or less, and a viscosity average degree of polymerization of the starting polyvinyl alcohol of the polyvinyl acetal (A1) is from 600 to 1500.

**6.** A laminated glass obtained by adhering a plurality of glass sheets with the interlayer film for laminated film according to any one of claims 1 to 5.

**7.** The laminated glass according to claim 6 which exhibits a visible light transmittance at a wavelength within a range of from 380 to 780 nm of 70% or more and a solar transmittance at a wavelength within a range of from 300 to 2500 nm of 70% or less.

**8.** The laminated glass according to claim 6 or 7 which has a haze of 1.5% or less.

**9.** The laminated glass according to any one of claims 6 to 8 which exhibits a compression shear strength (s1) immediately after adhesion of 5 $N/mm^2$ or more and has a ratio (s2/s1) of a compression shear strength (s2) after heat treatment at 100°C for 100 hours to the compression shear strength (s1) of from 0.8 to 1.2.

**10.** The laminated glass according to claim 9 which exhibits a compression shear strength (s1) immediately after adhesion of 10 $N/mm^2$ or more.

**11.** A method for manufacturing the interlayer film for laminated glass according to any one of claims 1 to 5, comprising:

preparing a dispersion (d3) containing polyvinyl acetal (A1), the anhydrous. zinc antimonate (B), the plasticizer (C) and an organic solvent (D), in which the polyvinyl acetal (A1) is dissolved,
melt-mixing the dispersion (d3) and polyvinyl acetal (A2), and
shaping it into a film-like form.

**12.** The method for manufacturing an interlayer film for laminated glass according to claim 11, wherein the preparing the dispersion (d3) comprises:

preparing a dispersion (d2) containing the polyvinyl acetal (A1), the anhydrous zinc antimonate (B) and the organic solvent (D), in which the polyvinyl acetal (A1) is dissolved, and
preparing the dispersion (d3) by mixing the dispersion (d2) and the plasticizer (C).

**13.** The method for manufacturing an interlayer film for laminated glass according to claim 12, wherein the dispersion (d2) is prepared by mixing the polyvinyl acetal (A1) with a dispersion (d1) containing the anhydrous zinc antimonate (B) and the organic solvent (D).

**14.** The method for manufacturing an interlayer film for laminated glass according to any one of claims 11 to 13, wherein at least one of the dispersions (d1), (d2) and (d3) is subjected to pulverization.

**15.** The method for manufacturing an interlayer film for laminated glass according to any one of claims 11 to 14, wherein the polyvinyl acetal (A1) is obtained by acetalizing a polyvinyl alcohol having a viscosity average degree of polymerization of from 600 to 2500.

**16.** The method for manufacturing an interlayer film for laminated glass according to any one of claims 11 to 15, wherein a difference in the degree of acetalization of the polyvinyl acetal (A1) and the polyvinyl acetal (A2) is 8 mol% or less.

**17.** The method for manufacturing an interlayer film for laminated glass according to any one of claims 11 to 16, wherein the weight ratio (A1/A2) of the polyvinyl acetal (A1) to the polyvinyl acetal (A2) is from 0.2/100 to 10/100.

## Patentansprüche

**1.** Zwischenschichtfolie für laminiertes Glas, die aus einer Harzzusammensetzung hergestellt ist, die Polyvinylacetal (A), wasserfreies Zinkantimonat (B) und einen Weichmacher (C) umfasst, wobei das wasserfreie Zinkantimonat (B),

das ein Molverhältnis von $ZnO/Sb_2O_5$ von 0,8 bis 1,2 aufweist, mit einem durchschnittlichen Teilchendurchmesser von 60 nm oder weniger in der Harzzusammensetzung dispergiert ist.

**2.** Zwischenschichtfolie für laminiertes Glas nach Anspruch 1, wobei das wasserfreie Zinkantimonat (B) mit einem durchschnittlichen Teilchendurchmesser von 30 nm oder weniger in der Harzzusammensetzung dispergiert ist.

**3.** Zwischenschichtfolie für laminiertes Glas nach Anspruch 1 oder 2, wobei die Harzzusammensetzung wasserfreies Zinkantimonat (B) in einer Menge von 0,1 bis 3 Gewichtsteilen und den Weichmacher (C) in einer Menge von 20 bis 100 Gewichtsteilen, auf 100 Gewichtsteile des Polyvinylacetals (A) bezogen, enthält.

**4.** Zwischenschichtfolie für laminiertes Glas nach einem der Ansprüche 1 bis 3, wobei das Polyvinylacetal (A) ein Polyvinylacetal (A1) und ein Polyvinylacetal (A2) umfasst, ein durchschnittlicher Viskositätspolymerisationsgrad eines Ausgangspolyvinylalkohols des Polyvinylacetals (A2) höher ist als derjenige eines Ausgangspolyvinylalkohols des Polyvinylacetals (A1) und ein Gewichtsverhältnis (A1/A2) des Polyvinylacetals (A1) zu dem Polyvinylacetal (A2) 0,2/100 bis 10/100 beträgt.

**5.** Zwischenschichtfolie für laminiertes Glas nach Anspruch 4, wobei ein Unterschied im Acetalisierungsgrad des Polyvinylacetals (A1) und des Polyvinylacetals (A2) 8 Mol-% oder weniger beträgt und ein durchschnittlicher Viskositätspolymerisationsgrad des Ausgangspolyvinylalkohols des Polyvinylacetals (A1) 600 bis 1500 beträgt.

**6.** Laminiertes Glas, das durch Befestigen mehrerer Glasscheiben an die Zwischenschichtfolie für laminierte Folie nach einem der Ansprüche 1 bis 5 erhalten wird.

**7.** Laminiertes Glas nach Anspruch 6, das eine Durchlässigkeit für sichtbares Licht bei einer Wellenlänge innerhalb des Bereichs von 380 bis 780 von 70 % oder mehr und einen Sonnendurchlässigkeitsgrad bei einer Wellenlänge innerhalb eines Bereichs von 300 bis 2500 nm von 70 % oder weniger aufweist.

**8.** Laminiertes Glas, nach Anspruch 6 oder 7 das eine Trübung von 1,5 % oder weniger aufweist.

**9.** Laminiertes Glas nach einem der Ansprüche 6 bis 8, das eine Druckscherfestigkeit (s1) direkt nach dem Befestigen von 5 $N/mm^2$ oder mehr aufweist und ein Verhältnis (s2/s1) einer Druckscherfestigkeit (s2) nach der Hitzebehandlung bei 100 °C für 100 Stunden zur Druckscherfestigkeit (s1) von 0,8 bis 1,2 besitzt.

**10.** Laminiertes Glas nach Anspruch 9, das eine Druckscherfestigkeit (s1) direkt nach dem Befestigen von 10 $N/mm^2$ oder mehr aufweist.

**11.** Verfahren zur Herstellung der Zwischenschichtfolie für laminiertes Glas nach einem der Ansprüche 1 bis 5, umfassend:

das Herstellen einer Dispersion (d3), die Polyvinylacetal (A1), das wasserfreie Zinkantimonat (B), den Weichmacher (C) und ein organisches Lösungsmittel (D) enthält, in dem das Polyvinylacetal (A1 gelöst wird,
das Schmelzmischen der Dispersion (d3) und von Polyvinylacetal (A2) und das Gestalten zu einer folienähnlichen Form.

**12.** Verfahren zur Herstellung einer Zwischenschichtfolie für laminiertes Glas nach Anspruch 11, wobei das Herstellen der Dispersion (d3) Folgendes umfasst:

das Herstellen einer Dispersion (d2), die Polyvinylacetal (A1), das wasserfreie Zinkantimonat (B) und das organische Lösungsmittel (D) enthält, in dem das Polyvinylacetal (A1) gelöst wird, und
das Herstellen der Dispersion (d3) durch Mischen der Dispersion (d2) and des Weichmachers (C).

**13.** Verfahren zur Herstellung einer Zwischenschichtfolie für laminiertes Glas nach Anspruch 12, wobei die Dispersion (d2) durch Mischen des Polyvinylacetals (A1) mit einer Dispersion (d1), die das wasserfreie Zinkantimonat (B) und das organische Lösungsmittel (D) enthält, hergestellt wird.

**14.** Verfahren zur Herstellung einer Zwischenschichtfolie für laminiertes Glas nach einem der Ansprüche 11 bis 13, wobei mindestens eine der Dispersionen (d1), (d2) und (d3) einer Pulverisierung unterworfen wird.

15. Verfahren zur Herstellung einer Zwischenschichtfolie für laminiertes Glas nach einem der Ansprüche 11 bis 14, wobei das Polyvinylacetal (A1) durch Acetalisieren eines Polyvinylalkohols erhalten wird, der einen durchschnittlichen Viskositätspolymerisationsgrad von 600 bis 2500 aufweist.

16. Verfahren zur Herstellung einer Zwischenschichtfolie für laminiertes Glas nach einem der Ansprüche 11 bis 15, wobei der Unterschied des Acetalisierungsgrads des Polyvinylacetals (A1) und des Polyvinylacetals (A2) 8 Mol-% oder weniger beträgt.

17. Verfahren zur Herstellung einer Zwischenschichtfolie für laminiertes Glas nach einem der Ansprüche 11 bis 16, wobei das Gewichtsverhältnis (A1/A2) des Polyvinylacetals (A1) zum Polyvinylacetal (A2) 0,2/100 bis 10/100 beträgt.

**Revendications**

1. Film d'intercouche pour verre feuilleté formé par une composition de résine comprenant de l'acétal de polyvinyle (A), de l'antimonate de zinc anhydre (B) et un plastifiant (C), l'antimonate de zinc anhydre (B) ayant un rapport molaire $ZnO/Sb_2O_5$ de 0,8 à 1,2 étant dispersé avec un diamètre de particules moyen de 60 nm ou moins dans la composition de résine.

2. Film d'intercouche pour verre feuilleté selon la revendication 1, l'antimonate de zinc anhydre (B) étant dispersé avec un diamètre moyen de particules de 30 nm ou moins dans la composition de résine.

3. Film d'intercouche pour verre feuilleté selon la revendication 1 ou 2, la composition de résine contenant de l'antimonate de zinc anhydre (B) en une quantité comprise entre 0,1 et 3 parties en poids et le plastifiant (C) en une quantité comprise entre 20 et 100 parties en poids en se basant sur 100 parties en poids de l'acétal de polyvinyl (A).

4. Film d'intercouche pour verre feuilleté selon l'une quelconque des revendications 1 à 3, l'acétal de polyvinyle (A) comprenant un acétal de polyvinyle (A1) et un acétal de polyvinyle (A2), un degré moyen de viscosité de polymérisation d'un alcool polyvinylique de départ de l'acétal de polyvinyle (A2) étant supérieur à celui d'un alcool polyvinylique de départ de l'acétal de polyvinyle (A1), et un rapport en poids (A1/A2) de l'acétal de polyvinyle (A1) sur l'acétal de polyvinyle (A2) étant compris entre 0,2/100 et 10/100.

5. Film d'intercouche pour verre feuilleté selon la revendication 4, une différence du degré d'acétalisation entre l'acétal de polyvinyle (A1) et l'acétal de polyvinyle (A2) étant de 8 % en mole ou moins, et un degré moyen de viscosité de polymérisation de l'alcool polyvinylique de départ de l'acétal de polyvinyle (A1) étant de 600 à 1500.

6. Verre feuilleté obtenu par adhésion d'une pluralité de feuilles de verre avec le film d'intercouche pour le film feuilleté selon l'une quelconque des revendications 1 à 5.

7. Verre feuilleté selon la revendication 6, qui présente un facteur de transmission de la lumière visible à une longueur d'onde dans la plage de 380 à 780 nm de 70 % ou plus et un facteur de transmission de la lumière solaire à une longueur d'onde dans une plage de 300 à 2500 nm de 70 % ou moins.

8. Verre feuilleté selon la revendication 6 ou 7, qui a un trouble de 1,5 % ou moins.

9. Verre feuilleté selon l'une quelconque des revendications 6 à 8, qui présente une résistance au cisaillement par compression (s1) immédiatement après l'adhésion de 5 $N/mm^2$ ou plus et a un rapport (s2/s1) d'une résistance au cisaillement par compression (s2) après un traitement thermique à 100°C pendant 100 heures sur la résistance au cisaillement par compression (s1) de 0,8 à 1,2.

10. Verre feuilleté selon la revendication 9, qui présente une résistance au cisaillement par compression (s1) immédiatement après l'adhésion de 10 $N/mm^2$ ou plus.

11. Procédé de fabrication du film d'intercouche pour verre feuilleté selon l'une quelconque des revendications 1 à 5, qui comprend :

la préparation d'une dispersion (d3) contenant l'acétal de polyvinyle (A1), l'antimonate de zinc anhydre (B), le plastifiant (C) et un solvant organique (D), dans lequel l'acétal de polyvinyle (A1) est dissous,

le mélange en fusion de la dispersion (d3) et de l'acétal de polyvinyle (A2), et
son façonnage en une forme de type film.

**12.** Procédé de fabrication d'un film d'intercouche pour verre feuilleté selon la revendication 11, la préparation de la dispersion (d3) comprenant:

la préparation d'une dispersion (d2) contenant l'acétal de polyvinyle (A1), l'antimonate de zinc anhydre (B) et le solvant organique (D), dans lequel l'acétal de polyvinyle (A1) est dissous, et
la préparation de la dispersion (d3) par mélange de la dispersion (d2) et du plastifiant (C).

**13.** Procédé de fabrication d'un film d'intercouche pour verre feuilleté selon la revendication 12, la dispersion (d2) étant préparée par mélange de l'acétal de polyvinyle (A1) avec une dispersion (d1) contenant l'antimonate de zinc anhydre (B) et le solvant organique (D).

**14.** Procédé de fabrication d'un film d'intercouche pour verre feuilleté selon l'une quelconque des revendications 11 à 13, au moins une des dispersions (d1), (d2) et (d3) étant soumise à une pulvérisation.

**15.** Procédé de fabrication d'un film d'intercouche pour verre feuilleté selon l'une quelconque des revendications 11 à 14, l'acétal de polyvinyle (A1) étant obtenu par acétalisation d'un alcool polyvinylique ayant un degré moyen de viscosité de polymérisation de 600 à 2 500.

**16.** Procédé de fabrication d'un film d'intercouche pour verre feuilleté selon l'une quelconque des revendications 11 à 15, une différence du degré d'acétalisation entre l'acétal de polyvinyle (A1) et l'acétal de polyvinyle (A2) étant de 8 % en mole ou moins.

**17.** Procédé de fabrication d'un film d'intercouche pour verre feuilleté selon l'une quelconque des revendications 11 à 16, le rapport en poids (A1/A2) de l'acétal de polyvinyle (A1) sur l'acétal de polyvinyle (A2) étant compris entre 0,2/100 et 10/100.

*Fig. 1*

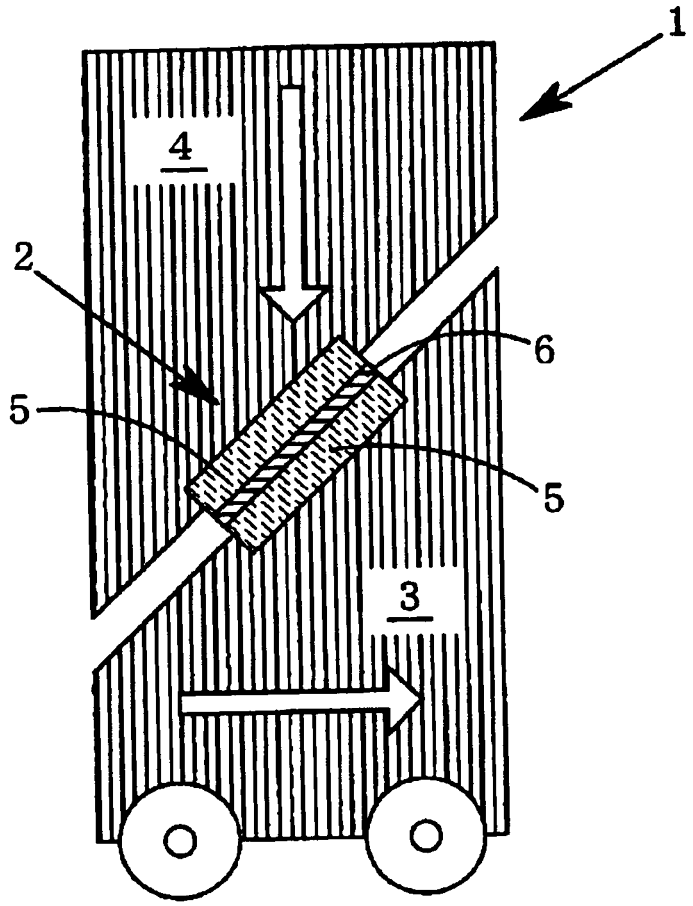

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2003265033 A
- JP 2003265034 A
- JP 2005157011 A
- JP 8217500 A
- JP 8259279 A
- JP 2001302289 A
- JP 2005343723 A
- JP 2003261360 A
- JP 2006027962 A
- JP 2005187226 A
- JP 2001261383 A
- JP 9211221 A
- JP 2006206654 A
- JP 2001526165 T


### Non-patent literature cited in the description


- *J. Aerosol Res.,* 2005, vol. 20 (3), 213-218
- IRIS-AP. Thermo Fisher Scientific K.K, 2000